# EUROPEAN PATENT APPLICATION

(11) **EP 2 886 263 A1**
(43) Date of publication of application: **24.06.2015**
(21) Application number: 13382540.6
(22) Date of filing: 20.12.2013
(51) Int. Cl.: B25J 9/00

(54) **Robotised installation**

(71) Applicant: Getting Robotika S.L., 31800 Alsasua (Navarra) (ES)
(72) Inventor: Etxeberria Martínez, Íñigo, 31800 Alsasua, Navarra (ES)
(74) Representative: Stiebe, Lars Magnus

(57) **Abstract**

A robotised installation for working on at least one piece, comprising a robot (10) having at least six axes of freedom and at least one turnplate (50) in respect to a first vertical axis, wherein said turnplate (50) is configured to receive at least one workpiece. The installation comprises a pedestal (20) rotatable in respect to a second vertical axis, said robot (10) being mounted at one end of an arm (30) disposed on the pedestal (20) and configured to rotate together with it, wherein said robot (10) is radially displaced in respect to said second vertical axis. The installation is configured so that, when in use, at least one part of the robot (10) can be introduced within the perimeter of the turnplate (50) on which the work piece is placed, by means of rotation of the pedestal (20) and/or the arm (30).

## Description

### TECHNICAL FIELD

The present invention relates to the field of manufacturing and finishing work pieces using robotised cells.

### BACKGROUND OF THE INVENTION

In piece manufacturing processes, it is common to use a robot to perform tasks for which it has been programmed. These tasks may be wide-ranging, depending on the type and application of the piece. Examples of such tasks include machining, painting, lubricating, smoothing, deburring, and polishing, among others. In order to facilitate the treatment of a piece using a robot, the latter is usually placed on a base and the piece is mounted on a turntable. This way, the robot accesses the piece from its base. The manipulation of the piece by the robot presents various difficulties: for some pieces, in particular large-sized pieces (weighing several tonnes, for example) often the robot is incapable of accessing all points of the piece that require work. At other times, especially for smaller-sized pieces, wherein their volume does not surpass the table's perimeter, often the robot cannot get close enough to all the points of the piece that need to be treated. The attempted solution is to stop the robot and reposition the piece, in such a way that in the new position the robot can access the largest possible number of zones of the piece's surface.

The most obvious consequence of the above solution is that a lot of robot cycle time is lost, which in turn implies a low productivity in the finishing of the pieces. To overcome this problem, sometimes two turntables are used with respective pieces, in such a way that the robot, situated approximately in between the two tables, works alternately on one piece or the other, reducing the time wasted.

However, using two tables improves the problem of cycle times, but it is not always possible to access all the zones of the piece's surface. For example, if the piece has hollows on the inside of which the robot must act, as is the case, among others, of aerogenerator bushings, it is impossible for the robot to reach the entire work surface from its base.

For this reason, sometimes other implementations have been used. For example, it is common to place the base of the robot on a linear "track" which allows the robot to be brought closer or further away from the table(s) on which the piece(s) are placed. Even so, there are still points of the piece's surface that are inaccessible. For example, in pieces wherein their volume does not surpass the table's perimeter, the robot does not reach the surface of the piece.

Another known implementation consists of hanging the robot from a carriage or gantry. This implementation is complex, and therefore, financially expensive. Although this may facilitate access to some points of the piece which are inaccessible in any of the other configurations, there are still points on various pieces that a robot hanging from a gantry cannot access.

Finally, occasionally a retractable (telescopic) arm has been used on which the robot is fixed. In this implementation, in cases where the robot needs to access parts of pieces that are within the perimeter of a table, the arm extends to bring the robot close to the piece. This solution is complex, especially if the intention is to maintain the same precision as the robot has on a fixed pedestal. Also, it takes a lot of time to extend and retract the arm and, in short, it is expensive in terms of time and productivity. Finally, with a telescopic arm it is not possible to work on two tables in order to eliminate the loss of time required for loading and unloading the piece.

Therefore, it is easy to appreciate the need to achieve a robotised installation or cell that allows access to all the points of the surface of a piece, irrespective of the size and complexity thereof.

### DESCRIPTION OF THE INVENTION

The present invention attempts to overcome the drawbacks mentioned above resulting from the automation of piece manufacturing and finishing processes.

Thus, in a first aspect of the invention, a robotised installation is provided for working on at least one piece. The installation comprises a robot of at least six axes of freedom and at least one turnplate in respect to a first vertical axis. The turnplate is configured to receive at least one work piece. The installation comprises a pedestal that can rotate in respect to a second vertical axis. The robot is mounted at one end of an arm disposed on the pedestal and configured to rotate above the pedestal. The robot is radially displaced in respect to the second vertical axis. The installation is configured so that, when in use, at least one part of the robot can be introduced within the perimeter of the turnplate on which the work piece is placed, by rotating the assembly made up of the pedestal and the arm.

Preferably, the arm is a cantilever arm scaled/designed so that at least a part thereof can be introduced within the perimeter of the turnplate by means of at least the rotation of the assembly made up of the pedestal and the cantilever arm.

In a possible embodiment, the installation comprises a second turnplate configured to receive a second piece to be treated. In this case, the installation is configured so that the robot treats alternately the piece of the first turnplate and the piece of the second turnplate.

In a possible embodiment, the turnplate comprises securing means for securing the piece to be treated.

In a possible embodiment, the pedestal is situated on a displaceable track. In another possible embodiment, the pedestal is situated on a vertical track.

In another possible embodiment, the cantilever arm is situated on a vertical track, configured to displace in a vertical direction above the pedestal.

In a possible embodiment, the installation is configured in such a way that, when in use, the rotation of the plate on which the piece is situated is synchronised with the rotation of the assembly made up of the pedestal and the arm. In a more particular embodiment, the rotations of the plate and the assembly made up of the pedestal and the arm are synchronised also with the rotation of the robot.

Advantages and additional characteristics of the invention will be apparent from the detailed description that follows and will be particularly pointed out in the attached claims.

### BRIEF DESCRIPTION OF THE DRAWINGS

To complement the description and with a view to contributing to a better understanding of the characteristics of the invention, according to an example of a practical embodiment thereof, a set of drawings is attached as an integral part of the description, which by way of illustration and not limitation represent the following:
Figure 1 shows a perspective view of a robotised installation, according to a possible embodiment of the invention.
Figure 2 shows an elevation view of the installation of figure 1.
Figure 3 shows a plan view of the installation of figure 1.
Figure 4 shows an alternative embodiment of the robotised installation of the invention.
Figure 5 shows a close-up of the table, plate, and support on which the piece to be treated can be placed, according to a possible embodiment of the invention.
Figures 6 and 7 show respective elevation views of an example of application of the installation of the invention, wherein the robot treats two different pieces alternately.
Figures 8 to 10 show respective plan views of the same example of application of the installation of the invention, wherein the robot treats two different pieces alternately.
Figures 11 to 15 illustrate a sequence of synchronised movements between the turnplate and the pedestal, thanks to which the arm on which the robot is situated is capable of adopting a radial position in respect to the turnplate.

### DESCRIPTION OF A MODE OF EMBODIMENT OF THE INVENTION

Next is a description of a mode of embodiment of the robotised system (or robotised cell or installation) of the invention, for manufacturing and/or finishing pieces in an automated manner.

In the context of the present invention, a cell is understood as the assembly made up of a robot for working on pieces situated on a support and the carriage or table (or carriages and tables) with a rotating support on which the piece (or pieces) to be treated is (are) placed. In this text, the terms "cell", "installation", "station" or "system" are used interchangeably to refer to the aforementioned assembly. The installation may be used for any application for which robotised cells are normally used in a conventional manner. Non-limiting examples of possible applications are machining, painting, lubricating, deburring, polishing, lapping or smoothing of pieces. Therefore, whenever this text refers to "treating", "finishing" or "working" pieces, it must be interpreted as any action related to the piece and directed towards the manufacturing or finishing thereof.

The robotised installation of the invention allows any type of piece to be treated, irrespective of its size. In a non-limiting manner, and by way of an example, the installation allows pieces of any size to be treated: small pieces, such as door handles and hardware items, and pieces no larger than about 20 kg in general; medium-sized pieces (weighing between 20 kg and 80 kg); and large-sized pieces, such as those whose weight exceeds approximately 80 kg and which may reach several dozen tonnes. Likewise, the installations allows pieces made of any material to be treated: pieces made of relatively soft metals, such as for example aluminium pieces (for example, engine blocks); steel pieces, whether small or large (for example, open die forgings) or flat steel pieces; and pieces produced by casting or forging, wherein the tolerance is very high. Non-limiting examples of materials that the pieces can be made of include steel, iron, composites or any alloys or combinations thereof. And with regard to applications: pieces for the construction of aircraft, aerogenerator blades, or other pieces used in other construction or industrial sectors, such as the automotive or ship-building industry.

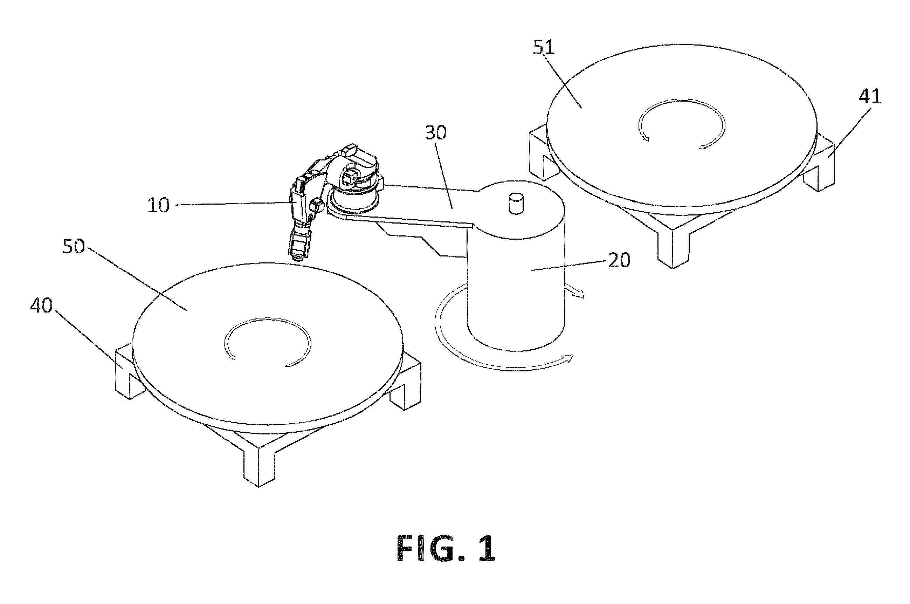

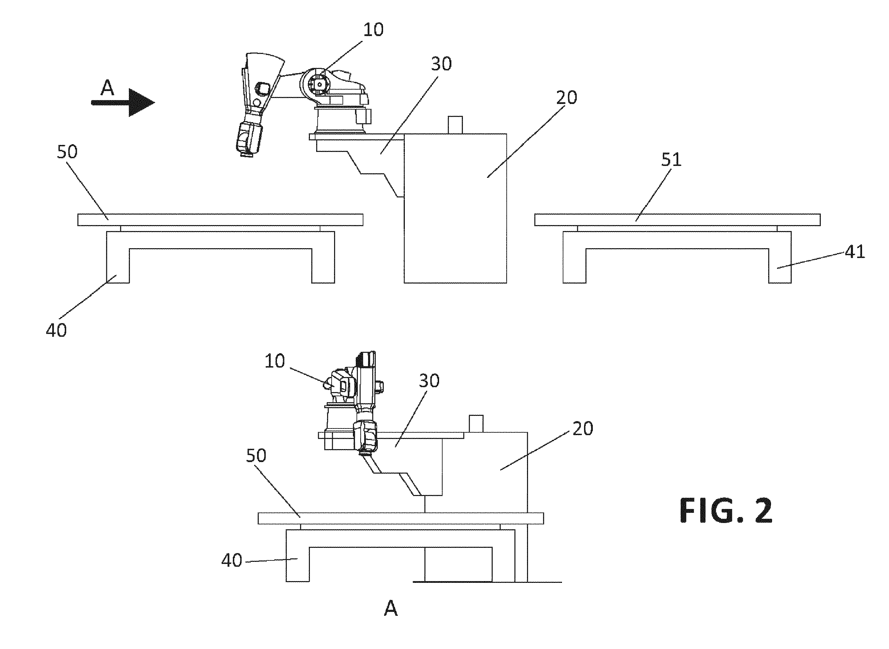

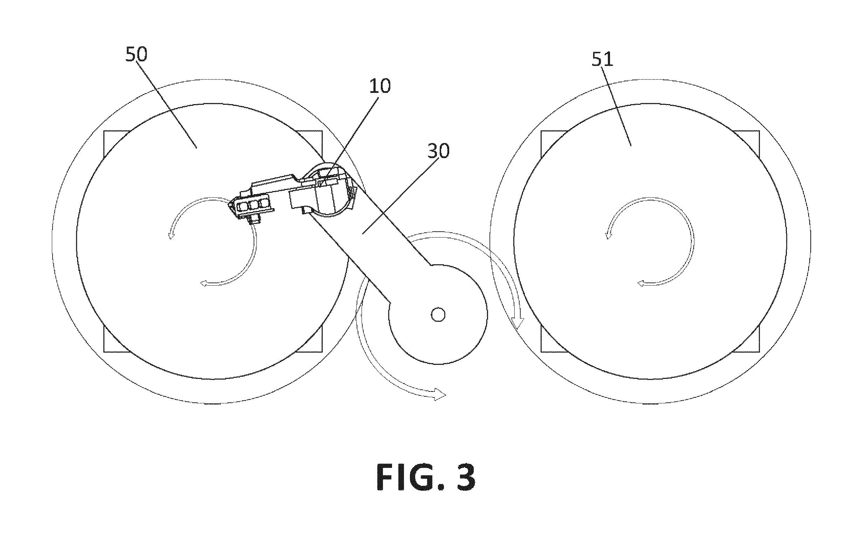

Figure 1 shows a perspective view of a robotised installation, according to a possible embodiment of the invention. Figures 2 and 3 show an elevation view and a plan view of the same installation, respectively. The installation is made up of a robot 10 which has preferably at least six axes or degrees of freedom or movement. The robot 10 is a conventional robot and is outside the scope of the invention. In general, it is made up of a base, a first arm joined to the base and a second arm joined to the end of the first arm which is not joined to the base. At the end of the second arm the tool or instrument that will be used to work on the piece is installed.

The robot 10 is situated on one arm or extension 30, preferably a cantilever, which in turn rotates or turns on a pedestal or support 20. The pedestal 20 is rotary and allows full rotation (360º) in both directions. Thanks to the fact that the robot 10 is resting or supported on an arm or extension 30, preferably a cantilever, instead of directly on the pedestal 20, the robot 10 can access any point of the turntable on which the piece rests, and, therefore, any point of the work piece, irrespective of the latter's dimensions. The dimensions of the cantilever arm or extension 30 must be appropriate for the arm 30 to withstand the weight of the robot 10, at the same time as managing to be introduced within the perimeter of the table on which the piece is placed, sufficiently to treat any surface of any piece (cavity in a hollow piece, small piece, etc.).

The installation further comprises at least one turnplate 50, preferably disposed on a table 40. Throughout this text, the expressions "turnplate" and "turntable" are used interchangeably and both (plate and table) may be integrated into a single rotary support or element. The table 40 is preferably fixed. The work piece is placed on the turnplate 50. The turnplate 50, which also allows complete rotation (360º), is configured to rotate in either of the two directions. Both the pedestal 20 and the turnplate 50 can rotate without any stop. The work piece (not illustrated in figures 1 to 3) is placed on the turnplate 50 or on a device disposed on it, on which the piece remains substantially fixed. The piece remains still in respect to the device's coordinates system or equipment's coordinates system, but moves thanks to the turnplate 50 in respect to the table 40 (given that the plate 50 rotates in respect to the table 40).

When in use, the robot 10 displaces drawing a circumference having as radius the length of the arm - preferably a cantilever - and as centre the base of the pedestal, in such a way that depending on the position of the pedestal 20 (determined by its rotation), the robot 10 either manages to remain very close to the work table 40 and can access its work area, or remains distant from the table 40, so as not to hinder, for example, loading and unloading of the piece. In the case of there being a second work table, as described hereafter, this configuration allows the robot 10 to be moved close to the second table when necessary.

Therefore, a seventh degree of freedom is added to the six degrees of freedom of the robot 10, due to the rotation of the pedestal 20 and an eighth degree of freedom due to the rotation of the plate 50. Thanks to this configuration, of the robot on an arm that rotates above the pedestal, it is possible for the robot's TCP (Tool Center Point) to reach any point of the piece's surface, irrespective of the size and shape of the piece, by means of the robot's at least six degrees of freedom, the rotation of the pedestal and the rotation of the turnplate.

This assembly made up of the robot 10 on the cantilever arm 30 which in turn rotates or turns on the pedestal 20, and the table 40 with the turnplate 50 constitutes a minimum configuration of the cell or installation of the invention. Figures 1 to 3 illustrate also a second table 41 with a turnplate 51. This second table and plate are similar to the first ones. This second configuration, with two tables 40, 41 allowing at the same cycle of the robot to treat alternately two pieces, which do not have to be the same, is a preferred configuration in respect to the configuration having just one table.

In a particular embodiment, the rotation of the plate 50 on which the piece is situated is synchronised with the rotation of the assembly made up of the pedestal 20 and the arm 30 - preferably cantilever - on which the robot 10 rests. In a more particular embodiment, the rotations of the plate 50 and of the assembly made up of the pedestal 20 and arm 30 are synchronised also with the rotations of the axes of the robot 10. This synchronisation between table or turnplate 50 and pedestal 20 (and therefore arm 30) is designed to orientate gradually the axis that aligns the piece to be treated and the robot facing each other. Put differently, the aim is for the robot 10 to attack the piece situated on the plate 50 in a virtually linear manner. The word "virtually" is used because the disposition of the elements, shape of the piece and the axes of freedom of the pedestal and robot do not allow for a genuinely linear approach between the robot and the piece. To overcome this impediment, the installation of the invention is programmed for the turnplate 50 and the pedestal 20 to rotate in small steps (one or several degrees per step), in such a way that the point or points of access to the piece are gradually aligned with the pedestal 20, and more specifically, with the robot 10 situated on it. This achieves therefore that following several steps of synchronised movement, for example alternating steps between the pedestal and the plate, the robot 10 can work on the piece with a virtually linear approach.

In some cases, this synchronisation is necessary for the robot 10 to be able to access all the points of the piece's surface. For example, in the event of the piece having a hollow whose inner surface the robot must work on (as in the case of bushings for aerogenerators), it is usual for the length of the arm 30 on which the robot 10 rests to be greater than the diameter of the hollow of the piece through which the robot must enter. For this reason, to introduce the robot inside the piece it is necessary to have a synchronised movement between the robot 10, the arm 30 and the plate 50. In this synchronised movement the arm 30 must pass from a tangential position in respect to the plate 50 to a radial position in respect to the plate 50, through one of the hollows in the piece.

In the embodiment wherein the installation has just one table with one piece, the pedestal 20 and the table 40 are situated next to each other, at a distance that allows the robot to access the greatest possible portion of the piece, using all of the cell's degrees of freedom. The distance that separates the table from the pedestal depends on the size and shape of the piece, as a person skilled in the art will be able to understand.

In the embodiment wherein the installation has two tables with one piece on each table, the pedestal 20 is situated between the two tables 40, 41. Depending on what each of the two pieces is like, as there is no reason for them to be the same or to have the same size or shape, the arm 30 will have to rotate more or less to reach the piece that is being worked on. The smaller the piece, the more the position of the arm will tend to have a radial component and less a tangential component. As in the previous case, the exact position of the tables and the pedestal and the distances between each table and the pedestal will have to be such that the robot 10 can access, with the help of the cantilever arm 30, the greatest possible portion of each piece, using all of the cell's degrees of freedom. To conclude, the distance that separates each table from the pedestal will depend on the size and shape of the respective piece, as a person skilled in the art will be able to understand.

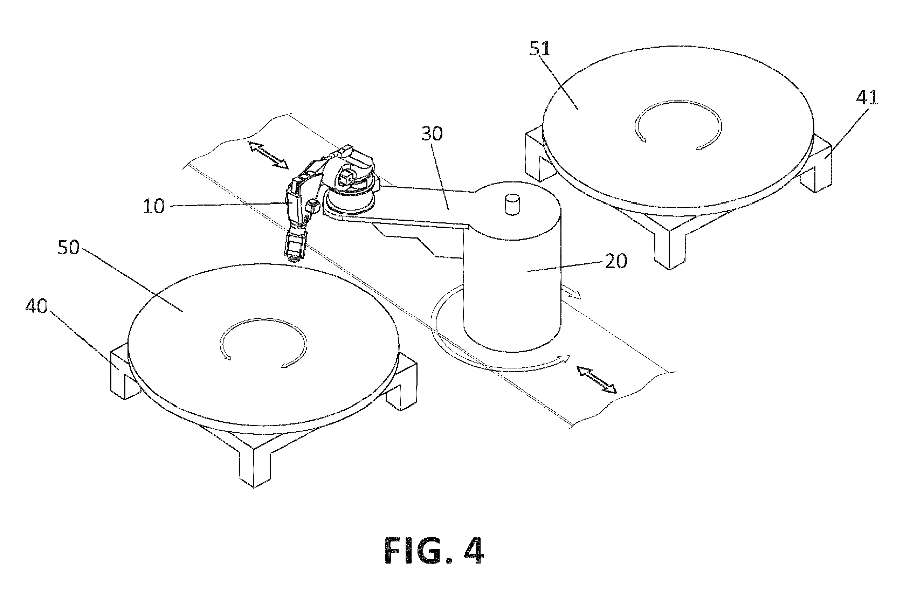

In a particular embodiment, illustrated in figure 4, the pedestal 20 is situated on a linear track, linear unit or gantry-type unit 60 which moves along an axis, this linear track 60 constituting an additional degree of freedom. In another particular embodiment, not illustrated, the pedestal 20 is situated on a track that can move on two or even three axes, said track providing one additional degree of freedom (in the case of two axes) or two additional degrees of freedom (in the case of three axes). The track, whether linear or not, is used in applications that require treating pieces with parts that are difficult to access with the cell's eight degrees of freedom.

In another particular embodiment, not illustrated, the cantilever arm or extension 30 is situated on a vertical track above the pedestal 20. Therefore, the cantilever arm 30 moves along a vertical axis, this vertical linear track constituting an additional degree of freedom. This facilitates access to parts of the pieces with extremely complicated access. In another particular embodiment, not illustrated, the complete pedestal 20 is situated on a vertical track, therefore being configured to move in a vertical direction.

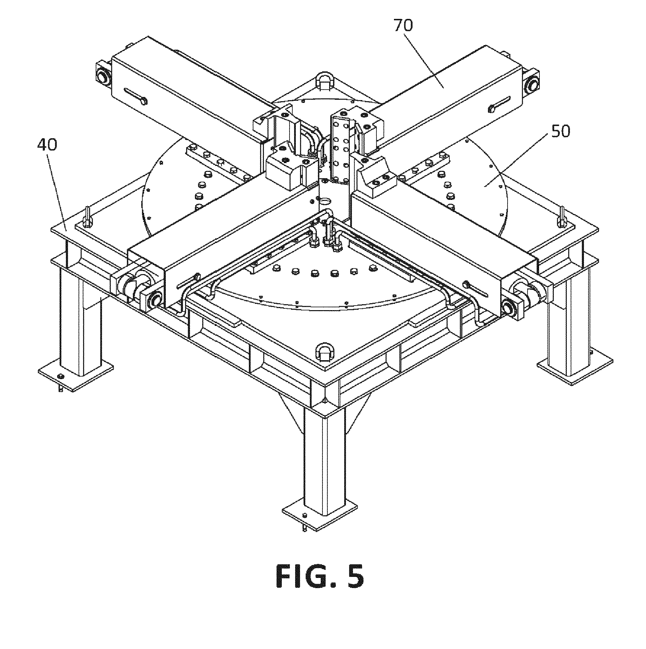

Figure 5 shows a close-up of the table 40 and device/equipment 70 on which the piece to be treated can be placed. The piece in question is placed on the turnplate 50. The piece can be secured in a device/equipment 70 in a determined position or not secured. As may be understood, depending on the size and shape of the piece, it will be necessary to secure it or not. In a possible embodiment, the equipment comprises securing means. In a more particular embodiment, the securing means are hydraulic clamps. Figure 5 illustrates the securing element 70, which in this case is a hydraulic clamp.

The robot 10 (and the complete cell or installation) is designed to adapt to the shape of the piece or pieces. The robot 10 is therefore programmable, in such a way that the different references for the pieces can be programmed, which may be very different from each other, complicating automation thereof.

Finally, the installation also comprises a dynamic and flexible interface for programming the movements of the robot for technicians with an industrial profile. This human-machine interface (HMI) or operative's interface must be very intuitive despite the complexity of the system's automation. To do this, graphic interfaces are used and the number of variables that depend on the operator are minimised. Specifically, a PC personal computer is used and an industrial touch screen on which a control system has been installed (for example, a Scada System) incorporating specific programmed modules. Using this HMI all the parameters of all systems are grouped together under a single human machine interface, making it possible for a suitably trained operator to handle the cell or installation.

Next is an example of how the robotised installation of the invention is capable of working alternately with two very different pieces, each one being situated on one table. For this example, the following pieces have been selected: the first piece is a piece of large dimensions, which in this case is a bushing for an aerogenerator. As a person skilled in the art will be aware, an aerogenerator bushing is a piece which has internal cavities (in other words, a relatively hollow piece, whose interior may be accessed through one or several holes in its surface). The volume of a bushing may reach 5000 mm x 5000 mm x 5000 mm and its weight 50 Tonnes. The second piece is a piece of small dimensions, specifically, a piece whose volume does not surpass the perimeter of the table on which it is situated. It is a piece for a ship engine with a large cylinder capacity.

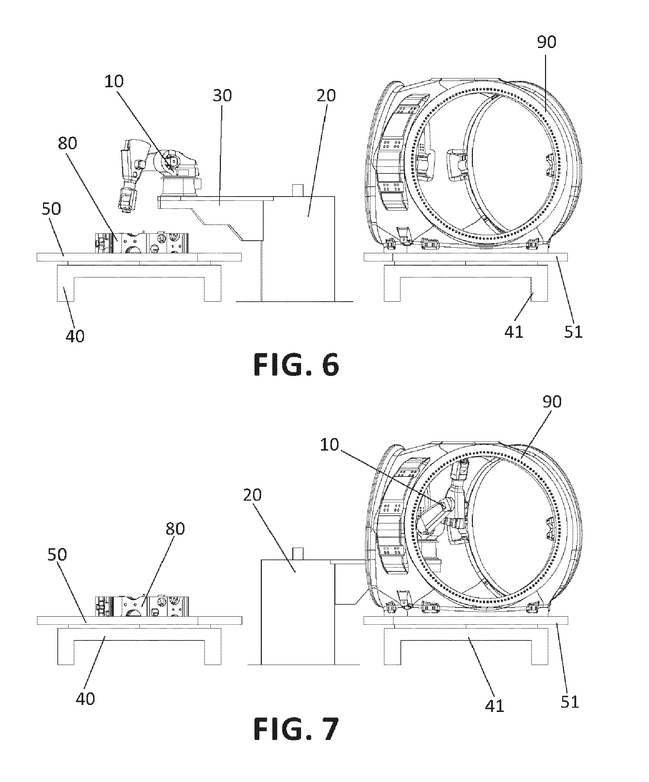

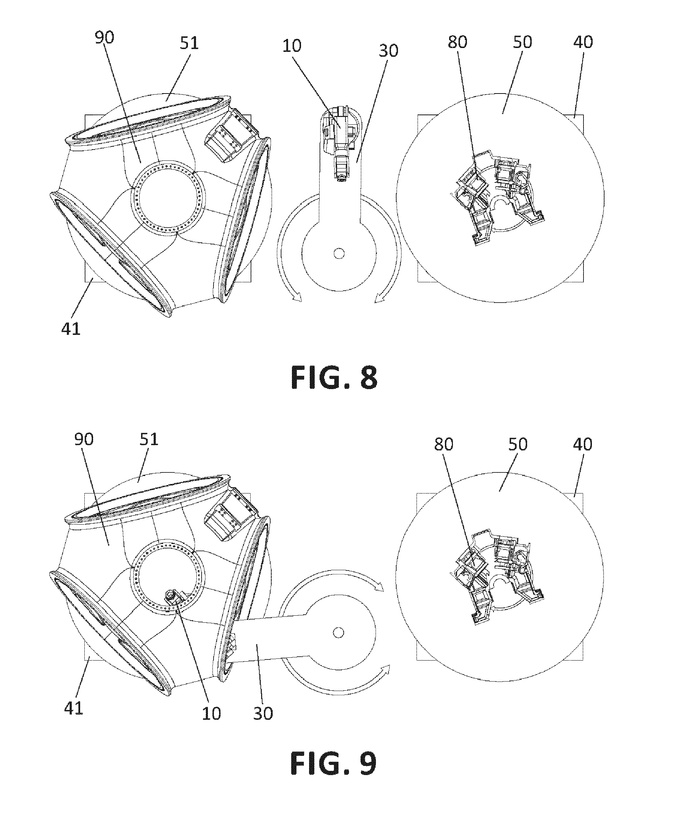

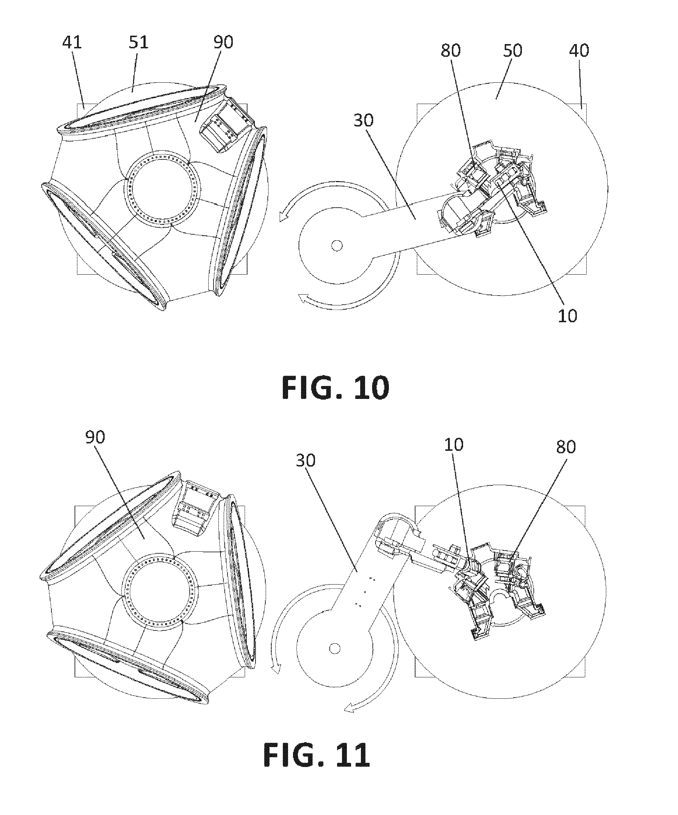

Figures 6 and 7 show respective elevation views of this example, whereas figures 8 to 10 show respective plan views of the same example. In figures 6 and 10, it is possible to see how the robot 10 is working on the piece 80, which is the small piece, whose volume remains within the perimeter of the plate 50. Thanks to the arm, in the example a cantilever arm 30, on which the robot 10 rests, the latter can access the inside of the perimeter of the turnplate 50 in order to treat the piece 80. In order to reach all the points of its surface, the turnplate 50 rotates and, if necessary, the pedestal 20 also rotates. In this case, to access a fair number of points of the piece 80, it is not necessary for both rotations to be synchronised.

So that the robot 10 can work on the other piece 90, i.e., pass from piece 80 to piece 90, the pedestal 20 must rotate. Figure 8 illustrates an instant of the rotation, when the robot 10 is not working on either of the two pieces.

Figures 7 and 9 show how the robot 10 treats the piece 90, which is the large piece (bushing with a large internal cavity that is accessed through various holes in its surface). As may be observed, access to all the points of this piece is very complicated. Especially, it is extremely complicated to access its inner surface. In this case, it is necessary for the rotation of the pedestal 20, the robot 10 and the plate 51 to be synchronised, in such a way that various alternate movements of each one of them, in small steps, allows the robot 10 to enter the inside of the piece 90 and work on it.

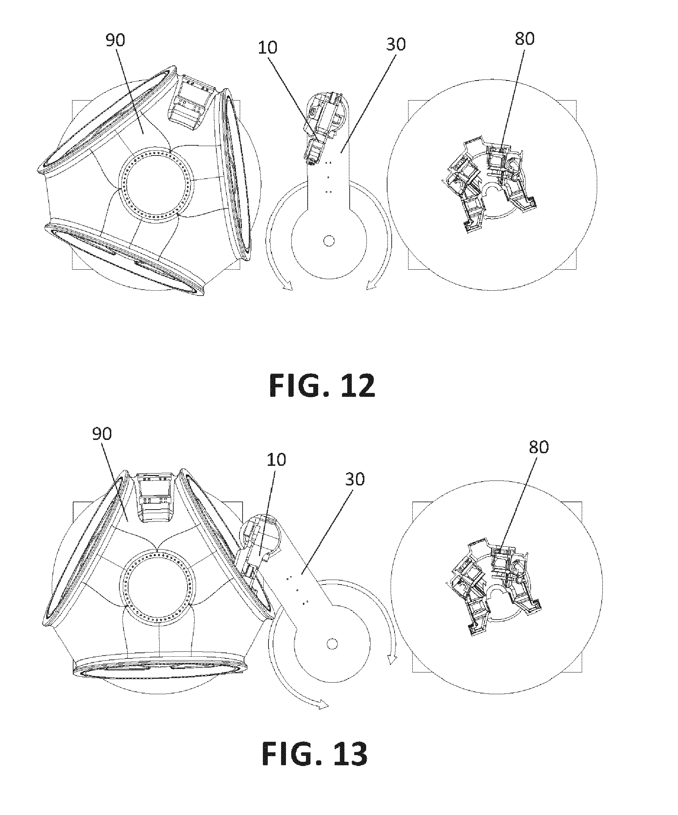

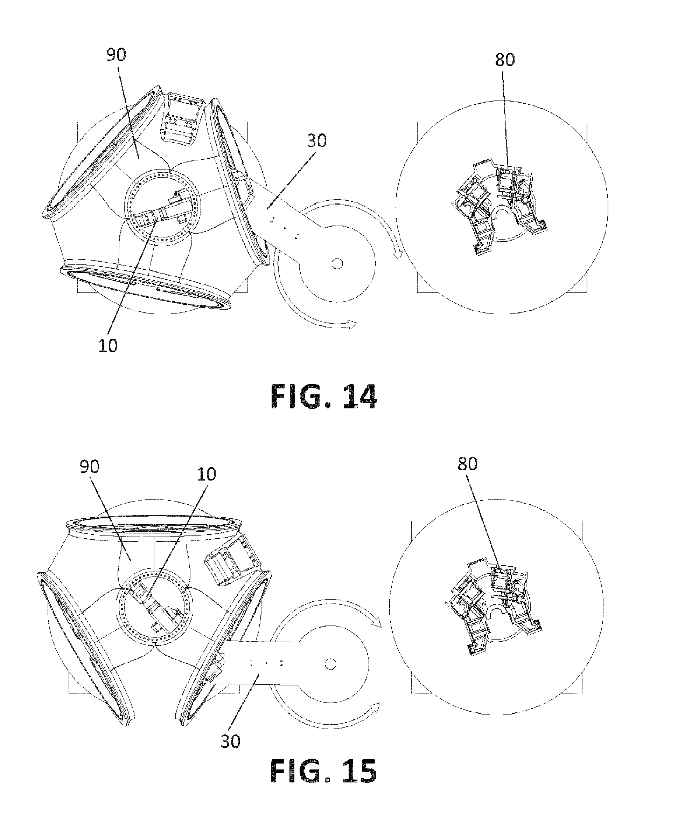

Figures 11-15 illustrate a sequence of synchronised movements between the turnplate and the pedestal (and the robot which is on it). As may be observed, it is very complicated to introduce the robot in the piece 90. In the first figure (figure 11), the robot is working on the piece 80, whose volume remains within the plate's perimeter. In figure 12, the pedestal 20 has turned in an counterclockwise direction to facilitate access of the robot 10 to the second piece 90 situated on the other table. For the time being, the plate or table 51 on which this second piece 90 is situated has not rotated. In figure 13 it can be appreciated how the plate on which piece 90 is situated has rotated slightly in a counterclockwise direction and, in a synchronised manner, the pedestal 20 has also rotated in a counterclockwise direction. This synchronised movement has allowed the arm on which the robot 10 is situated to be introduced in the cavity forming the piece 90. Also the robot 10 has displaced radially from the arm that supports it. In order for the robot to continue to work on more points on the inside of the piece 90, it is necessary for the arm 30 to penetrate further inside it. Note that, as of the position of figure 13, if only the pedestal 20 were to rotate counterclockwise, the arm 30 would collide with the piece 90. If, on the contrary, the pedestal 20 were not to rotate and the plate on which the piece 90 rests were to rotate - in this case clockwise - the collision would not occur but the robot 10 would not be capable of reaching many points on the inside of the piece 90. Therefore the synchronised movement between the elements of the installation is required. This sequence is shown in figure 14, wherein the image represents the clockwise rotation of the plate on which the piece 90 is situated synchronised with the counterclockwise rotation of the pedestal 20, which allows the arm 30, and consequently the robot 10, to be introduced further into the cavity of piece 90. Due to the fact that the arm 30 accesses the piece through a relatively central - and not peripheral - zone of the cavity giving access to the piece, the robot 10 has a lot of capacity of movement and manoeuvre inside the piece 90. However, this position is still not sufficient for the robot to be able to work on all of the points on the internal surface of piece 90. This is resolved with a new synchronised rotation between the pedestal and the plate, as shown in figure 15: the plate turns in small clockwise steps, and alternately, the pedestal 20 rotates counterclockwise. The arm 30 and, in consequence, the robot 10, face the points of interest of the piece in a radial manner. Stated in other words, thanks to the combination of synchronised movements and steps, the robot 10 attacks the points of interest on the inner surface of the piece in a virtually linear manner. Put differently, the arm 30 passes from a tangential position in respect to the plate on which the piece is to a radial position in respect thereto.

In this text, the word "comprises" and its variants (such as "comprising", etc.,) must not be interpreted as excluding, in other words, they do not exclude the possibility of what is described including other elements, steps, etc.

On a separate note, the invention is not limited to the specific embodiments described above but also encompasses, for example, the variants that may be embodied by the average person skilled in the art (for example, with regard to the choice of materials, dimensions, components, configuration, etc.), within the scope of what may be inferred from the claims.

## Claims

1. A robotised installation for working on at least one piece, comprising a robot (10) having at least six axes of freedom and at least one turnplate (50) in respect to a first vertical axis, wherein said turnplate (50) is configured to receive at least one work piece,
**characterised in that** the installation comprises a pedestal (20) capable of rotating in respect to a second vertical axis, said robot (10) being mounted at one end of an arm (30) disposed on the pedestal (20) and configured to rotate together with the latter, wherein said robot (10) is displaced radially in respect to said second vertical axis, the installation being configured so that, when in use, at least one part of the robot (10) can be introduced within the perimeter of the turnplate (50) on which the work piece is placed, by means of rotation of the assembly made up of the pedestal (20) and the arm (30).

2. The installation of claim 1, wherein said arm (30) is a cantilever arm designed so that at least a part thereof can be introduced within the perimeter of the turnplate (50) by means of at least the rotation of the assembly made up of the pedestal (20) and the cantilever arm (30).

3. The installation of any of the preceding claims, which comprises a second turnplate (51) configured to receive a second piece to be treated, wherein the installation is configured so that the robot (10) treats alternately the piece of the first turnplate (50) and the piece of the second turnplate (51).

4. The installation of any of the preceding claims, wherein said turnplate (50, 51) comprises securing means for securing the piece to be treated.

5. The installation of any of the preceding claims, wherein said pedestal (20) is situated on a displaceable track (60).

6. The installation of any of the preceding claims, wherein said pedestal (20) is situated on a vertical track.

7. The installation of any of claims 2 to 5, wherein said cantilever arm (30) is situated on a vertical track, configured to displace in a vertical direction above the pedestal (20).

8. The installation of any of the preceding claims, configured in such a way that, when in use, the rotation of the plate (50, 51) on which the piece is situated is synchronised with the rotation of the assembly made up of the pedestal (20) and the arm (30).

9. The installation of claim 8, wherein the rotations of the plate (50, 51) and the assembly made up of the pedestal (20) and the arm (30) are also synchronised with the rotation of the robot (10).
